# EUROPÄISCHE PATENTSCHRIFT

(11) **EP 2 698 335 B1**
(45) Veröffentlichungstag und Bekanntmachung des Hinweises auf die Patenterteilung: **15.07.2015**
(21) Anmeldenummer: 13005335.8
(22) Anmeldetag: 06.04.2010
(51) Int. Cl.: B66B 21/00, B66B 21/06, B66B 21/10, B66B 23/00, B66B 23/02

(54) **Auflager für einen Gerüstabschnitt einer Einrichtung zum Personentransport**
Bearing for a framing section of a device for transporting persons
Appui pour un tronçon d'une cadre d'une installation pour le transport de personnes

(30) Priorität: 09.04.2009 DE 102009017076
(43) Veröffentlichungstag der Anmeldung: 19.02.2014
(62) Teilanmeldung aus: 10717507.7
(73) Patentinhaber: Kone Corporation, 00330 Helsinki (FI)
(72) Erfinder: Lanzki, Winfried, 59423 Unna (DE); Tautz, Andreas, 45731 Waltrop (DE); Carsten, Rolf, 45529 Sprockhövel (DE); Thiel, Alfred, 97922 Lauda-Königshofen (DE); Zeiger, Heinrich, 48157 Münster (DE)
(74) Vertreter: Döpp, Ludger

(56) Entgegenhaltungen:
- JP-A- 51 112 084
- JP-A- 2004 175 529

## Beschreibung

Die Erfindung betrifft ein Auflager für einen Gerüstabschnitt einer Einrichtung zum Personentransport gemäß gattungsbildendem Teil des ersten Patentanspruchs.

Die DE 23 14 120 offenbart eine Rolltreppe mit einem Endlostrittstufenband und dessen jeweils zwei einander abgewandte Setzstufen bzw. Stoßflächen aufweisenden Trittstufen im tragenden Bandtrum mit etwa horizontalen Trittflächen über gegensinnig bzw. durch eine Rollsteigstrecke verbundene Neigungsstrecken führenden Laufbahnen, wobei die Laufbahnen des Trittstufenbandes in jeweils einer der Neigungsstrecken sowie gegebenenfalls der Rollsteigstrecke zugeordnete Bahnabschnitte unterteilt und die letzteren an, miteinander in den Bereichen der Abschnittsenden lösbar verbundenen Neigungsstrecken- sowie gegebenenfalls Rollsteigstreckengerüsten kontinuierlich ineinander übergehend angeordnet sind.

Der DE 20 2004 020 583 U1 ist eine modernisierte Rolltreppe oder ein modernisierter Rollsteig zu entnehmen, beinhaltend ein entkerntes Traggerüst, in welches in den Umlenk- und bedarfsweise auch in den Übergangsbereichen, Schablonen einbaubar und ausrichtbar sind, die an vorgebbaren Stellen Stützelemente als Ausrichtepunkte für neu zu installierende Komponenten aufweisen.

Die JP 04371485 A beschreibt eine Handlaufführungseinrichtung für eine Personenförderanlage.

Zwischen einem unteren Ein- bzw. Ausstiegsbereich und einem oberen Aus- bzw. Einstiegsbereich erstrecken sich unter einem vorgebbaren Winkel geneigt verlaufende Transportabschnitte, die über einen horizontal verlaufenden Transportabschnitt miteinander verbunden sind.

In der US 5,052,539 wird eine so genannte Bogenrolltreppe beschrieben, bei welcher zwei räumliche Kurvenabschnitte gegeben sind und die Stufen von dem einen in den anderen Bogenabschnitt geführt werden. Durch diese Ausgangsstellung müssen die Stufen speziell an die Kontur des Bogens angepasst werden. Gleiches gilt für die Stufenführungen.

Die gattungsgemäße JP 2004175529 A offenbart ein höhenverstellbares Auflager für einen Gerüstabschnitt einer geradlinig verlaufenden Rolltreppe.

Der Erfindung liegt die Aufgabe zugrunde, ein Auflager für nach Art eines räumlichen Kurvenbogens geführte Rolltreppen oder Rollsteige bereit zu stellen, das unabhängig vom Neigungswinkel, respektive des Krümmungsverlaufes des Kurvenbogens, eine gezielte Ausrichtung und Verlegung der einzelnen Gerüstabschnitte der Rolltreppe bzw. des Rollsteiges gewährleistet.

Die Aufgabe wird dadurch gelöst, dass in mindestens einer der Konsolen Langlöcher vorgesehen sind, in welche Führungselemente der nicht verstellbaren Konsole einbringbar und dort festlegbar sind, und dass das jeweilige Einstellmittel durch eine Einstellschraube gebildet ist, die mit einer Gewindebuchse in Wirkverbindung steht.

Vorteilhafte Weiterbildungen des erfindungsgemäßen Auflagers sind den zugehörigen Unteransprüchen zu entnehmen.

Der jeweilige den Transportabschnitt bildende Kurvenbogen kann, über seine Länge gesehen, eine stetige Krümmung, beispielsweise einen Radius vorgebbarer Länge, aufweisen.

Alternativ besteht die Möglichkeit, dass der jeweilige den Transportabschnitt bildende Kurvenbogen, über seine Länge gesehen, aus ineinander übergehenden unterschiedlichen Radien gebildet ist. Hier bieten sich geometrische Konturen, wie Hyperbeln, Parabeln oder dergleichen, an.

Ebenfalls denkbar ist, dass der Transportabschnitt mehrere Kurvenbögen gleicher oder unterschiedlicher Krümmung aufweist, die bedarfsweise auch gegenläufig ausgebildet sein können. Somit können konvexe und konkave Bauweisen erzielt werden.

Ebenfalls denkbar ist, dass mehrere Kurvenbögen gleicher oder unterschiedlicher Krümmung im Verlauf des Transportabschnittes mit geradlinig verlaufenden Abschnitten in Wirkverbindung gebracht werden.

Von besonderem Vorteil, insbesondere auch im Hinblick auf den Austausch beschädigter Komponenten, ist, dass der gewölbt verlaufende jeweilige Transportabschnitt aus mehreren geradlinig oder auch gebogen ausgebildeten Gerüstabschnitten gebildet ist, die im Bereich ihrer einander zugewandten Enden miteinander verbunden sind.

Die Gerüstabschnitte sind vorzugsweise auf einem gebäudeseitig vorgesehenen, gewölbt oder geradlinig ausgebildeten Unterbau abgestützt.

Wie bereits angesprochen, sind die einzelnen Gerüstabschnitte geradlinig ausgebildet, d.h. sie folgen der Form des Verlaufs des Unterbaus nicht. Um hier eine problemlose Montage zu gewährleisten, wird vorgeschlagen, im Bereich eines jeden Gerüstabschnitts mindestens ein Auflager vorzusehen, über welches der jeweilige Gerüstabschnitt gegenüber dem Unterbau in Neigung und Höhe einstellbar positioniert werden kann.

Eine konkrete technische Ausgestaltungsform sieht hierbei vor, gerüstabschnittsseitig und gebäudeseitig zwei einander gegenüberliegende, relativ zueinander verstellbare Konsolen vorzusehen, die mit Einstellmitteln in Wirkverbindung stehen.

Einem weiteren Gedanken der Erfindung gemäß, wird im Bereich eines jeden Gerüstabschnitts ein Querträger zur Aufnahme des Auflagers positioniert, der zumindest konsolenseitig mit abgerundeten Außenkanten versehen ist, wobei zumindest die verstellbare Konsole mit einem gerundeten Abschnitt versehen wird, der über abgerundeten Kanten des Querträgers führbar ist.

Das jeweilige Einstellmittel wird vorteilhafterweise durch eine Einstellschraube gebildet, die innerhalb einer in dem Querträger positionierten Gewindebuchse verstellbar ist.

Da sich, in Abhängigkeit von der zu überbrückenden Länge zwischen den Ein- und Ausgangsabschnitten, temperaturbedingte Längenänderungen der Gerüstabschnitte im gewölbt oder stufenförmig verlaufenden Transportabschnitt nicht ausschließen lassen, wird, einem weiteren Gedanken der Erfindung gemäß, vorgeschlagen, die Einstellschraube in ihrem, dem gebäudeseitigen Unterbau zugewandten Endbereich mit einem Gleitkörper zu versehen, der sich auf einer am gebäudeseitigen Unterbau vorgesehenen bedarfsweise metallischen Gleitfläche abstützt.

Vorteilhafterweise sind in mindestens einer der Konsolen Langlöcher vorgesehen, in welche Führungselemente der anderen Konsole einbringbar und nach entsprechender Einstellung und Ausrichtung des jeweiligen Gerüstabschnitts festlegbar sind.

Der Erfindungsgegenstand ist anhand eines Ausführungsbeispiels in der Zeichnung dargestellt und wird wie folgt beschrieben. Es zeigen:
- Figur 1: Prinzipskizze einer Einrichtung zum Personentransport;
- Figur 2: Teilansicht einiger der Gerüstabschnitte samt Stützbereiche;
- Figuren 3 und 4: Darstellungen von einzelnen Gerüstabschnitten, die unter verschiedenen Neigungswinkeln abzustützen sind.

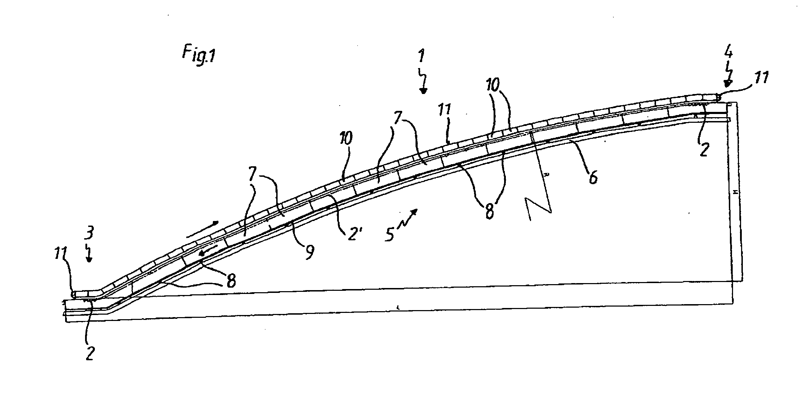

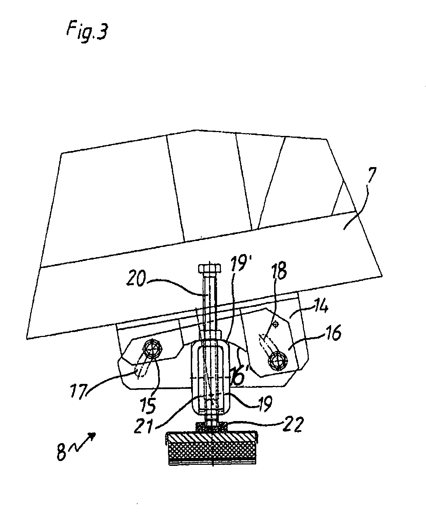

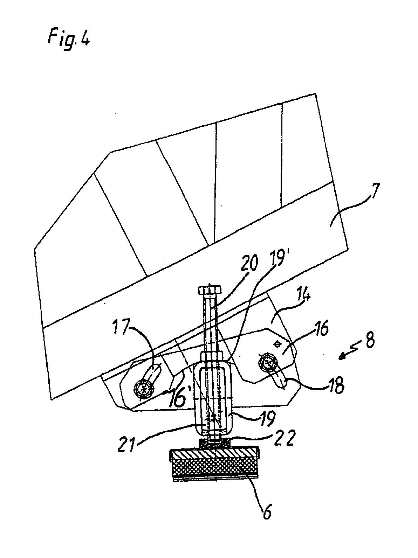

Figur 1 zeigt als Prinzipskizze eine in diesem Beispiel als Rolltreppe ausgebildete Einrichtung zum Personentransport 1. Selbige kann bedarfsweise auch ein Rollsteig sein, sofern die gesetzlich vorgeschriebenen Neigungswinkel eingehalten werden. Lediglich angedeutet ist ein, aus einer Vielzahl von Stufen 2 bestehendes Stufenband 2'. Die unterschiedlichen Transportrichtungen (aufwärts, abwärts) sind mit Pfeilen angedeutet. Im Bereich des Ein- 3 und/oder Ausgangsabschnittes 4 können nicht dargestellte Antriebe für das Stufenband 2' und den Handlauf 11 positioniert sein. In diesem Beispiel soll der linke untere Teil der Figur 1 einen Eingangsabschnitt 3 und der rechte obere Teil der Figur 1 einen Ausgangsabschnitt 4 darstellen. Zwischen dem unteren Eingangsabschnitt 3 und dem oberen Ausgangsabschnitt 4 erstreckt sich ein Transportabschnitt 5, der als räumlicher Kurvenbogen ausgebildet ist und ebenfalls Antriebe enthalten kann. In diesem Beispiel soll ein Kurvenbogen gegeben sein, der einen vorgebbaren Radius R, beispielsweise 210 m, aufweist. In diesem Beispiel ist gebäudeseitig ein gewölbter Unterbau 6 vorgesehen, der den Transportabschnitt 5 aufnimmt. Wie bereits angesprochen kann der Transportabschnitt 5 unter bestimmten Voraussetzungen auch freitragend ausgebildet werden. Der Transportabschnitt 5 selber wird gebildet durch eine Mehrzahl geradlinig verlaufender Gerüstabschnitte 7. Ein jeder Gerüstabschnitt 7 verfügt über Auflager 8, über welche er einstellbar auf der Oberfläche 9 des Unterbaus 6 abgestützt werden kann. Dies wird insbesondere in den Figuren 3 und 4 noch näher erläutert.

Auf dem jeweiligen Gerüstabschnitt sind Balustradenelemente 10, beispielsweise in Form von Glasscheiben, aufgesetzt, auf denen ein Handlauf 11 in Transportrichtung bewegt wird. Im Eingangsabschnitt 3, respektive dem Ausgangsabschnitt 4, wird der Handlauf 11 analog zum Stufenband 2' in seiner Laufrichtung umgekehrt. Der Handlauf 11 kann bedarfsweise vom Stufenbandantrieb angetrieben werden oder wirkt mit einem eigenen Antriebsmittel zusammen. In diesem Beispiel soll der Höhenunterschied H zwischen dem Eingangsabschnitt 3 und dem Ausgangsabschnitt 4 ca. 21,4 m betragen, während die Gesamtlänge L der Rolltreppe 1 ca. 79 m beträgt.

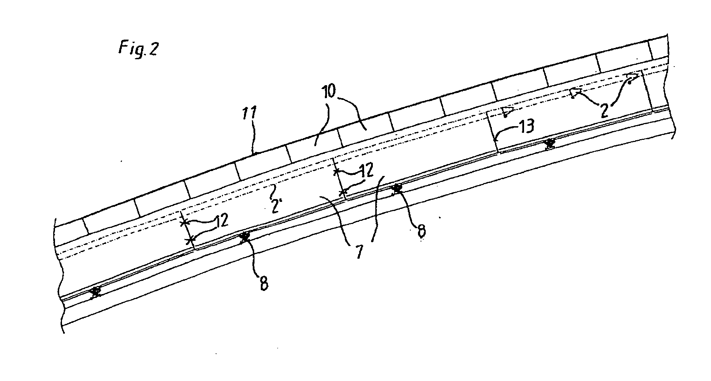

Figur 2 zeigt in vergrößerter Darstellung einige der in Figur 1 dargestellten Gerüstabschnitte 7 in Verbindung mit den Auflagern 8. Ebenfalls erkennbar ist das Stufenband 2' sowie einzelne Stufen 2. Ebenfalls erkennbar sind Balustradenelemente 10 sowie der Handlauf 11. Nur angedeutet ist, dass die einzelnen Gerüstabschnitte 7 über entsprechende Verbindungselemente 12 miteinander in Wirkverbindung gebracht werden.

Die Figuren 3 und 4 zeigen zwei gleichartig ausgebildete Auflager 8 in verschiedenen Ausrichtungspositionen. Erkennbar sind Teile eines Gerüstabschnitts 7, der nach Art eines Fachwerks aufgebaut ist. Unterhalb des jeweiligen Gerüstabschnitts 7 ist eine erste Konsole 14 befestigt, die ein Führungselement 15 aufweist, das in Richtung einer zweiten Konsole 16 weist und dort durch ein Langloch 17,18 hindurchführbar ist. Das jeweilige Langloch 17,18 ist auf einem Kreisbogen mit vorgebbarem Radius im Bereich der jeweiligen Konsole 14 bzw. 16 vorgesehen. Alternativ besteht die Möglichkeit, die Konsole 14 mit einem Durchgangsloch zu versehen und eine Schraube (nicht dargestellt) als Führungselement 15 zu verwenden. Angedeutet ist ein Querträger 19, der hochkant unterhalb des jeweiligen Gerüstabschnitts 7 hindurchgeführt ist. Der Querträger 19 ist zumindest im gerüstseitigen Bereich mit abgerundeten Außenkanten 19' versehen. Zumindest eine der Konsolen 14 weist im Bereich der Außenkanten 19' einen gerundeten Abschnitt 14' auf, der über die Außenkanten 19' führbar ist. An vorgebbaren Stellen im Bereich des Querträgers 19 werden die Lagerstellen, überwiegend bestehend aus den Konsolen 14 und 16, breitenabhängig positioniert. Der Querträger 19 nimmt im Bereich eines als Einstellschraube ausgebildeten Einstellelements 20 eine Gewindebuchse 21 auf, wobei die Einstellschraube 20 im Bereich ihres freien Endes mit einem Gleitkörper 22 zusammenwirkt. Lediglich angedeutet ist der Unterbau 6, auf welchem sich der Gleitkörper 22 abstützt.

**Bezugszeichenliste**

| | | | |
|---|---|---|---|
| 1 | Einrichtung zum Personentransport | | |
| 2 | Stufen | | |
| 2' | Stufenband | | |
| 3 | Eingangsabschnitt | | |
| 4 | Ausgangsabschnitt | | |
| 5 | Transportabschnitt | | |
| 6 | Unterbau | | |
| 7 | Gerüstabschnitt | | |
| 8 | Auflager | | |
| 9 | Oberfläche | | |
| 10 | Balustradenelement | | |
| 11 | Handlauf | | |
| 12 | Verbindungselement | | |
| 14 | Konsole | | |
| 14' | gerungeter Abschnitt | | |
| 15 | Führungselement | | |
| 16 | Konsole | | |
| 16' | Konsole | | |
| 17 | Langloch | | |
| 18 | Langloch | | |
| 19 | Querträger | | |
| 19' | gerundete Außenkante | | |
| 20 | Einstellelement | | |
| 21 | Gewindebuchse | | |
| 22 | Gleitkörper | | |
| A | Transportstrecke | H | Höhe |
| a | Abschnitt | L | Länge |
| b | Abschnitt | R | Radius |
| c | Abschnitt | | |

## Patentansprüche

1. Auflager für einen Gerüstabschnitt einer nach Art eines räumlichen Kurvenbogens geführten Einrichtung zum Personentransport (1), gebildet durch mehrere miteinander verbundene relativ zueinander verstellbare Konsolen (14,16), die mit Einstellmitteln (20) in Wirkverbindung stehen, **dadurch gekennzeichnet, dass** in mindestens einer der Konsolen (14,16) Langlöcher (17,18) vorgesehen sind, in welche Führungselemente (15) der nicht verstellbaren Konsole einbringbar und dort festlegbar sind, und dass das jeweilige Einstellmittel (20) durch eine Einstellschraube gebildet ist, die mit einer Gewindebuchse (21) in Wirkverbindung steht.

2. Auflager nach Anspruch 1, **dadurch gekennzeichnet, dass** die Langlöcher (17,18) auf einem Kreisbogen mit vorgebbarem Radius in der jeweiligen Konsole (14,16) eingebracht sind.

3. Auflager nach einem der Ansprüche 1 oder 2, **dadurch gekennzeichnet, dass** die Führungselemente (15) durch Gewindebolzen oder Schrauben gebildet sind und die Festlegung nach erfolgter Einstellung der Konsolen (14,16) durch Muttern erfolgt.

4. Auflager nach einem der Ansprüche 1 bis 3, **dadurch gekennzeichnet, dass** an dem freien Ende des jeweiligen Einstellmittels (20) ein Gleitkörper (22) vorgesehen ist.

5. Auflager nach einem der Ansprüche 1 bis 4, **dadurch gekennzeichnet, dass** eine der Konsolen (14) mit dem Gerüstabschnitt (7) verbunden ist und sich der Gleitkörper (22) auf einem gebäudeseitig vorgesehenen Unterbau (6) abstützt.

## Claims

1. A bearing for a framing section of a device for the passenger transportation (1) which extends in the form of a spatial curved arc, said bearing being formed by several consoles (14, 16) which are connected to each other and can be adjusted one to another and which are in operative connection with adjustment means (20), **characterized in that** oblong holes (17, 18) are provided in at least one of the consoles (14, 16), into which oblong holes guide elements (15) of the non-adjustable console can be inserted and fixed there, and that the respective adjustment means (20) is formed by an adjustment screw which is in operative connection with a threaded bush (21).

2. A bearing according to claim 1, **characterized in that** the oblong holes (17, 18) are arranged in the respective console (14, 16) on an arc of a circle having a pre-definable radius.

3. A bearing according to one of the claims 1 or 2, **characterized in that** the guide elements (15) are formed by threaded bolts or screws and they will be fixed by means of nuts after the consoles (14, 16) have been adjusted.

4. A bearing according to one of the claims 1 through 3, **characterized in that** a slide body (22) is provided at the free end of the respective adjustment means (20).

5. A bearing according to one of the claims 1 through 4, **characterized in that** one of the consoles (14) is connected to the framing section (7) and the slide body (22) rests upon a substructure (6) provided on the side of the building.

## Revendications

1. Appui pour un tronçon d'un cadre d'une installation de transport de personnes (1) qui s'étend sous forme d'un arc courbé dans l'espace, l'appui étant formé par plusieurs consoles (14, 16) reliées les unes aux autres et susceptibles d'être ajustées les unes par rapport aux autres, lesquelles sont en liaison opérationnelle avec des moyens d'ajustage (20), **caractérisé en ce que** des trous oblongs (17, 18) sont prévus dans au moins une des consoles (14, 16), dans lesquels trous oblongs on peut insérer et y fixer des éléments de guidage (15) de la console non-ajustable, et que le moyen d'ajustage respectif (20) est formé par une vis d'ajustage qui est en liaison opérationnelle avec une douille taraudée (21).

2. Appui selon la revendication 1, **caractérisé en ce que** les trous oblongs (17, 18) sont arrangés sur un arc de cercle ayant un rayon prédéterminé dans la console respective (14, 16).

3. Appui selon l'une des revendications 1 ou 2, **caractérisé en ce que** les éléments de guidage (15) sont formés par des goujons filetés ou des vis et ils sont fixés par moyen des écrous après que les consoles ont été ajustées.

4. Appui selon l'une des revendications 1 à 3, **caractérisé en ce qu'**un corps coulissant (22) est prévu à l'extrémité libre du moyen d'ajustage respectif (20).

5. Appui selon l'une des revendications 1 à 4, **caractérisé en ce qu'**une des consoles (14) est reliée au tronçon du cadre (7) et le corps coulissant (22) s'appuie sur une substructure (6) prévue du côté de l'édifice.
